# EUROPEAN PATENT SPECIFICATION

(11) **EP 0 261 917 B1**
(45) Date of publication and mention of the grant of the patent: **02.03.1994**
(21) Application number: 87308347.1
(22) Date of filing: 21.09.1987
(51) Int. Cl.: H04N 5/14

(54) **Detecting changes in video data**
Änderungsdetektierung in Videodaten
Détection de changements dans des données vidéo

(30) Priority: 20.09.1986 JP 222689/86; 20.09.1986 JP 222690/86
(43) Date of publication of application: 30.03.1988
(73) Proprietor: SONY CORPORATION, Tokyo 141 (JP)
(72) Inventor: Araki, Shoji c/o Patents Division, Shinagawa-ku Tokyo 141 (JP)
(74) Representative: Cotter, Ivan John

(56) References cited:
- GB-A- 2 150 724
- US-A- 4 161 750
- US-A- 4 337 481

## Description

This invention relates to processing video signals from a video signal source, for example a television camera, a video camera or the like, to detect changes in video data contained in the video signals. Such a video signal processing system can, for example, be used in a security monitor system for monitoring a predetermined area to detect a change in the condition of the area, that is to detect abnormalities in the area.

Security monitor systems have been widely employed in various places, such as banks and supermarkets, for preventing theft. In such security monitor systems, video cameras, television cameras or still cameras are employed for picking up a video image in an area to be monitored, which area is hereinafter referred to as the "monitored area". In the following disclosure, a video camera, television camera, etc. used for continuously picking up an image of the monitored area is generally referred to as the "camera".

In a typical security monitor system, video signals produced by the camera are monitored to detect changes in the video data for detecting a change of condition in the monitored area. The video signals are reproduced on a monitor screen, such as a cathode ray tube (CRT) and/or recorded on tape by means of a video tape recorder (VTR). Visual monitoring requires an operator to monitor the screen for detecting a change of condition of the monitored area. When the video signal is recorded on a VTR tape for later viewing in the event of a theft, etc., the recording time is strictly limited. Therefore, recording of all of the video signal during the period of monitoring requires extensive amounts of tape. In some security monitor systems, the available recording time per unit amount of tape has been increased by only recording video data during intervals corresponding to every other so many fields. However, in this case, when a change of the condition of the monitored area occurs outside of a recording interval, the change cannot be recognised.

In order to solve the aforementioned problem, Japanese Utility Model First (unexamined) Publication (Jikkai) Showa 53-1120226 proposes a video signal processing system which can automatically monitor video signals for detecting changes in video data contained in the video signals. In this system, video data is compared with video data in the immediately preceding field. The number of changes in corresponding pixels of the successive fields is counted. The counted value is compared with a preset threshold value for detecting a change in the condition of the monitored area. That is, when the counted value is greater than the threshold value, it is determined that the video data has changed and, thus, that a condition in or of the monitored area has changed.

In the foregoing system, which operates automatically for detecting a change of the video data, it is extremely important to prevent erroneous detection of a change of the video data due to signal noise being superimposed on the video signal. For example, if the flicker cycle period of a fluorescent lamp in the monitored area is not synchronous with the image pick-up cycle period, flicker "noise" can be superimposed on the video signal. This flicker noise tends to cause a change in the video data for a relatively large number of pixels. In such a case, an erroneous detection of a change in the video data inevitably is made, even though the condition of the monitored are is unchanged. It is possible to set the threshold value at a sufficiently high value to avoid or reduce the effects of noise. However, a greater threshold value, to be compared with the counted value, will lower the sensitivity to detecting changes in the video data. Therefore, a relatively small change occurring in the video signal can be overlooked due to low sensitivity.

UK patent application GB-A-2,150,724 describes a surveillance system in which a picture of an area under surveillance is generated and this is compared to reference data. When the difference between the picture and the reference data exceeds a predetermined threshold, an alarm signal is generated.

US patent US-A-4,337,481 describes a motion and intrusion detection system wherein scanning is performed at two different rates in order to detect fast and slow motion in a scene being viewed. To increase noise immunity, a special scan is provided which generates signals inhibiting the generation of alarm indications corresponding to points at which a possible noise situation exists.

According to one aspect of the invention there is provided a method of processing a video signal for detecting a change in the video data contained in a video signal generated by a video signal source, the method comprising the steps of:
converting an analog video signal received from the video signal source into a corresponding binary value digital video signal containing logical values representative of the signal level of the respective pixels;
generating a digital reference signal by sampling a predetermined number of video signal fields in the digital video signal, comparing the sampled predetermined number of video signal fields and excluding those pixels whose corresponding video data fluctuates in the sampled video signal fields so that a comparing step between a video signal field and the reference signal takes place only for those pixels whose video data is held constant over the sampled fields and the digital reference signal is produced on the basis of the video data of the sampled predetermined number of video signal fields, said reference signal containing a data component for each pixel, which data component is composed of an OR data component of corresponding logical values of the sampled video signal fields and an exclusive OR data component of the OR data component and AND data components of the logical values of the sampled video signal fields: and
detecting a change in the video data in the video signal by comparing each video signal field with the reference signal and producing a change detection signal when a change in the video data is detected.

Such a system can detect changes in the video data of a video signal with a satisfactorily high sensitivity while avoiding the possibility of erroneous detection due to signal noise or the like.

According to another aspect of the invention there is provided a video signal processing system for processing a video signal for detecting a change in the video data contained in a video signal generated by a video signal source, the system comprising:
convertor means for converting an analog video signal received from the video signal source into a corresponding binary value digital video signal containing logical values representative of the signal level of the respective pixels;
reference signal generator means for generating a digital reference signal by sampling a predetermined number of video signal fields in the digital video signal, comparing the sampled predetermined number of video signal fields and excluding those pixels whose corresponding video data fluctuates in the sampled video signal fields so that a comparing step between a video field and the reference signal takes place only for those pixels whose video data is held constant over the sampled fields and producing a digital reference signal on the basis of the video data of the sampled predetermined number of video signal fields; and
detector means for detecting a change in the video data in the video signal by comparing each video signal field with the reference signal and producing a change detection signal when a change in the video signal is detected, characterised in that said generating means generates a said reference signal containing a data component for each pixel, which data component is composed of an OR data component of corresponding logical values of the sampled video signal fields and an exclusive OR data component of the OR data component and AND data components of the logical values of the sampled video signal fields.

In deriving the reference signal, the reference signal generator means compares a predetermined number of sampled video signal fields and detects pixels for which the video data fluctuates. The video data for such pixels is thereafter excluded in deriving the reference signal so that the video data change detection operation takes place only for those pixels whose video data is held constant over the sampled fields. The pixels whose video data fluctuates within a predetermined number of sampled fields are regarded as unstable pixels which can be ignored in deriving the reference signal. Therefore, avoiding such pixels when determining if there are changes in the video data successfully avoids erroneous detection due to ambient signal noise.

The reference signal generator can be operative to update the reference signa cyclically at given intervals so that influence on the video signal source of variations due to environmental conditions, such as a changing irradiation angle of sunlight or so forth, can be avoided successfully.

The invention will now be further described, by way of illustrative and non-limiting example, with reference to the accompanying drawings, in which:
Figure 1 is a schematic block diagram of a security monitor system according to a preferred embodiment of the invention;
Figure 2 is a block diagram of a video signal processing circuit, according to a preferred embodiment of the invention, which is employed in the security monitor system of Figure 1;
Figure 3 shows an image field with a region in which changes in video data are checked;
Figure 4 shows how video data is stored in an RMEM area of a random access memory (RAM) shown in Figure 2;
Figure 5 is a circuit diagram of a binary video signal generator circuit and a synchronisation signal separator circuit;
Figure 6 is a timing chart illustrating the operation of the binary video signal generator circuit and the synchronisation signal separator circuit of Figure 5;
Figure 7 and 8 shown the structure of a GMEM area of the RAM shown in Figure 2;
Figure 9 is a flowchart showing the operation of the video signal processing system of Figure 2;
Figure 10 is a timing chart illustrating an operation of deriving a reference signal performed by the video signal processing system of Figure 2; and
Figures 11A to 11I are timing charts illustrating a video signal processing operation for detecting changes in video data performed by the video signal processing system on Figure 2.

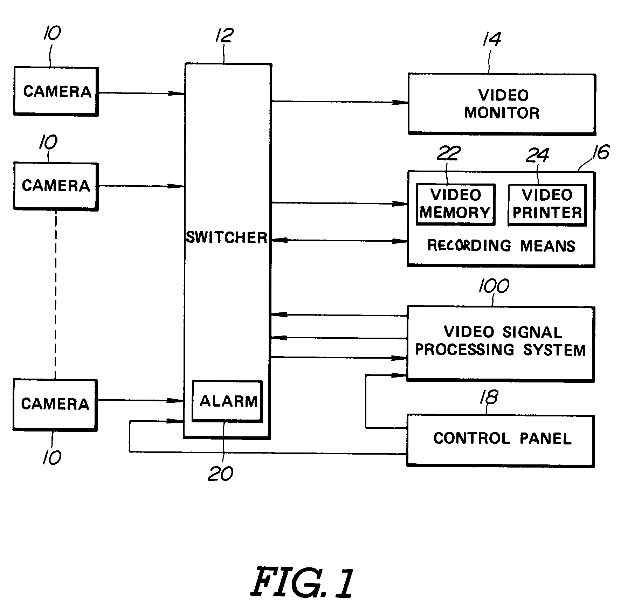

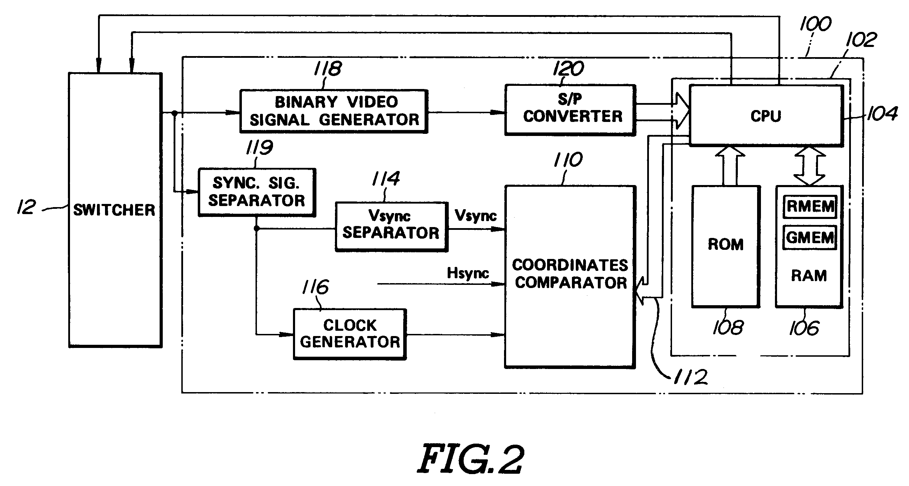

Figure 2 of the drawings, which is described in more detail below, shows a video signal processing system 100 according to a preferred embodiment of the invention. The processing system 100 of Figure 2 is capable of being used in various applications, though it is disclosed hereinbelow in a case in which it is used in conjunction with a security monitor system, in accordance with a preferred embodiment of the invention, illustrated in Figure 1, for detecting changes in the condition of a predetermined monitored area.

As shown in Figure 1, the security monitor system includes one or more cameras 10, each of which is focussed on a separate, predetermined monitored area to pick up separate video images of the corresponding monitored areas. The cameras 10 continuously output video signals, each of which contains data of the picked-up video image of the corresponding monitored area.

The cameras 10 output their video signals to a switcher 12 which is connected to a video monitor 14 (such as a CRT video screen), a recording device 16 (such as a video memory 22 and a video printer 24), and the video signal processing system 100. A manually operable control panel 18 is connected to control the switcher 12 and the system 100.

The switcher 12 continuously receives video signals from the cameras 10. The switcher 12 is programmed to select one of the video signals according to a predetermined schedule and feed the video signal to the monitor 14 which reproduces the video signal on a monitor screen as a visual image.

A schedule for selecting video signals from various cameras can be preset in the switcher 12 for switching the connection between the camera and the monitor 14 at given intervals and in a given order. The switcher 12 can also be responsive to a camera selection command inputted through the control panel 18 to select a camera to be connected to the monitor 14 irrespective of the predetermined order. The interval for switching the cameras can be determined to be long enough for visual observation of the displayed picture for checking the condition of the monitored area, and short enough successfully to monitor various areas.

The switcher 12 also selectively connects one of the cameras 10 at a time to the video signal processing system 100. As in the case of the monitor 14, the switcher 12 switches the connection between the cameras 10 and the video signal processing system 100 at predetermined intervals and in a given order. However, selection of the cameras to be connected to the system 100 is performed independently of selection of the cameras to be connected to the monitor 14. The switching interval for the connection between the cameras 10 and the system 100 is generally shorter than that for the connection between the cameras and the monitor 14. Fundamentally, the switching timing for the connection between the cameras 10 and the video signal processing system 100 is determined according to the processing speed of the system 100. That is, the switching interval for the switching connection between the cameras 10 and the system 100 is set to be slightly longer than or equal to the maximum possible period for processing one field of a video signal.

The video signal processing system 100 includes a binary video signal generator 118 (Figure 2) which generally serves as an analog-to-digital converter for converting analog video signals from the cameras 10 supplied via the switcher 12 into binary digital video signals indicative of the video data. In order to convert the analog video signal into the digital video signal, a threshold level is set in the binary video signal generator 118. In the illustrated embodiment, the threshold level is manually adjustable via the control panel 18.

The video signal processing system 100 compares the binary video signal with a reference signal which is indicative of reference video signal data. If the binary video signal matches the reference signal, it is determined that the video data is unchanged and thus that the condition of the corresponding monitored area is unchanged. If, however, the binary video signal does not match the reference signal, it is determined that a change in the video data has occurred and thus that a change in the condition of the corresponding monitored area has occurred.

In the latter case, the video signal processing system 100 generates a signal indicative of a change in the video data, which signal is hereinafter referred to as a "change detection signal". This change detection signal is fed to an alarm generator 20 (Figure 1) which is incorporated in the switcher 12. The alarm generator 20, which can comprise a bell, a buzzer, or a flashing light, for example, generates an alarm in response to the change detection signal.

Although, in the illustrated embodiment, the alarm generator 20 is incorporated in the switcher 12, it is possible for the alarm generator to be a component independent of the security monitor system or to be an external component to be connected to the security monitor system.

In the illustrated embodiment, the switcher 12 is responsive to the change detection signal to produce an operation command for the recording device 16. Also, the switcher 12 supplies to the recording device 16 a video signal representative of the video data of the monitored area in which a change of video data has been detected. The recording device 16 is thus activated to record the video data inputted from the switcher 12. In the illustrated embodiment, the video memory 22 is then activated to record the video data fed from the switcher 12. Simultaneously, the video printer 24 becomes active to print a still image of the monitored area based on the video information recorded in the video memory 22.

A VTR can be used as the recording device 16. In this case, the VTR will be activated in response to the operation command for performing the video data recording operation. The VTR may be maintained in operation for a given period of time so as to monitor the monitored area for the given period.

Figure 2 shows the construction of the video signal processing system 100 in more detail. Although the video signal processing system 100 is intended to be used in conjunction with a multi-channel security monitor system designed for monitoring a plurality of monitoring areas, the following discussion relates to single-channel video signal processing of a video signal from a single camera in order to simplify the disclosure and avoid confusion.

The video signal processing system 100 comprises a digital circuit including a microprocessor 102. The microprocessor 102 is composed of a control processing unit (CPU) 104, a random access memory (RAM) 106 and a read only memory (ROM) 108. A coordinates comparator 110 is connected to the CPU 104 via a bus 112. A synchronisation signal separator 119 strips out synchronisation signals from the video signal. The synchronisation signal separator 119 is connected to a vertical synchronisation signal separator 114, a clock signal generator 116 and the coordinates comparator 110. The coordinates comparator 110 receives a vertical synchronisation signal Vsync from the vertical synchronisation signal separator 114 and a horizontal synchronisation signal Hsync from the synchronisation signal separator 119. The coordinates comparator 110 is also connected to the clock generator 116 to receive therefrom a clock signal having a given frequency, e.g. 4 MHz. The coordinates comparator 110 determines the address of the video data of each pixel on the basis of the vertical synchronisation signal Vsync, the horizontal synchronisation signal Hsync and the clock signal. The address given for the video data of each pixel identifies a memory block for storing the video data in a memory area RMEM of the RAM 106.

The video data component of the analog video signal inputted from the switcher 12 is fed to the binary video signal generator 118, which converts the analog video signal into a corresponding binary digital video signal. The binary video signal outputted from the binary video signal generator 118 is in the form of serial data and is fed to a serial-to-parallel (S/P) converter 120 which converts it into parallel data which is fed to the CPU 104. In synchronism with this, the address data representative of the address of the corresponding memory block is inputted to the CPU 104 from the coordinates comparator 110 via the bus 112. Therefore, the CPU 104 transfers the parallel data to a memory block identified by the address data. Thus, the video data of each pixel can be stored in the RMEM area of the RAM 106.

It is possible to store the video data for one whole field of the video signal in the RMEM area. However, a greater volume of data requires a greater storage capacity and requires a longer processing time. For security monitoring purposes it is not necessary to monitor all of the video data in a field. By monitoring some predetermined section or sections of one field, changes occurring in the monitoring area can be detected successfully. By only partially monitoring all of the available video data, the memory capacity required for storing video data and reference signal data can be made smaller and the required processing time can be shortened, that is the processing speed can be increased.

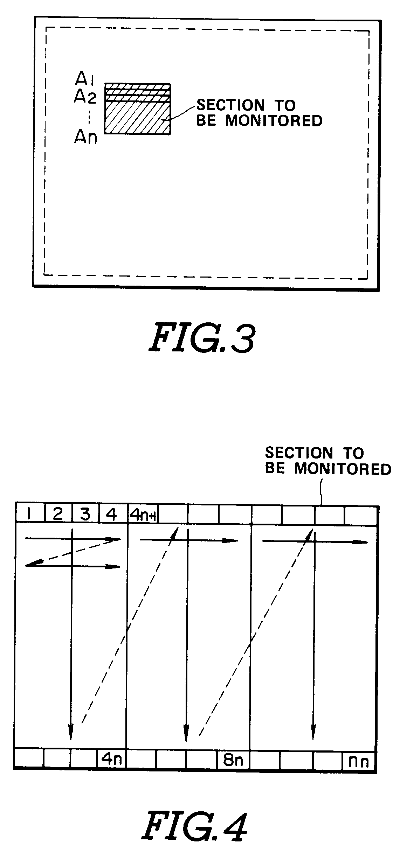

Therefore, according to the illustrated embodiment, the video data of the pixels residing in only a limited area is monitored. An example of the section monitored for a change in the video data is shown by a hatched area in Figure 3. As will be appreciated from Figure 3, only the video data of the pixels on horizontal scanning lines A₁, A₂ ... An is monitored in the illustrated example. This also allows the capacity of the S/P converter circuit 120 to be smaller. Furthermore, in the illustrated embodiment, the RMEM area of the RAM 106 is divided into 4-bite columns. The capacity of the S/P converter circuit 120 is set at 4 bites. The video data which has been series-to-parallel converted by the S/P converter circuit 120 is stored in the RMEM area of the RAM 106 in the order shown by arrows in Figure 4.

In a practical operation, the coordinates comparator 110 monitors the addresses of the pixels on the basis of the vertical synchronisation signal, the horizontal synchronisation signal and the clock signal for detecting the pixels on the horizontal scanning lines A₁, A₂ ... Aₙ and in the predetermined section on the horizontal scanning lines. In order to enable this operation, the CPU 104 supplies reference coordinate indicative signals representative of the coordinates of the pixels within the section of the field to be monitored. Such signals can be generated automatically from coordinate information inputted by an operator via the control panel 18. The coordinates comparator 110 compares the coordinate data derived with respect to each item of video data with reference coordinate indicative signal values to detect the video data of the pixels within the section to be monitored. The reference coordinate indicative signals contain coordinate data of the first pixel coordinates on respective horizontal scanning lines. The video data of a given number of pixels, which video data is inputted subsequently to the video data of the first pixel on the respective horizontal scanning lines A₁, A₂ ... Aₙ, is thus stored in the RMEM area of the RAM 106.

In the case of a multi-channel security monitor system, the sections to be monitored for changes in video data will be set with respect to respective monitored areas. Since the video signals in the respective monitoring channels are not synchronised with each other, coordinate positions of the sections to be monitored have to be detected independently of the other channels. For this purpose, the data in the coordinates comparator 110 is reset in response to a channel switching control signal from the CPU 104. Then, the coordinates comparator 110 waits for the subsequently inputted vertical scanning line before starting to derive the coordinates for the respective pixels. By this means, pixels within the section to be monitored for changes in video data can be detected precisely.

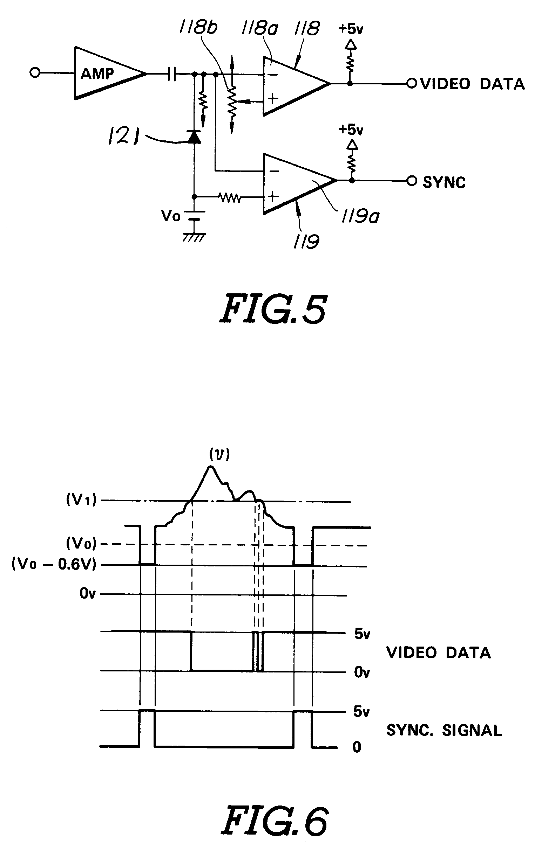

Figure 5 shows a detailed construction of the binary video signal generator 118 and the synchronisation signal separator 119. The binary video signal generator 118 and the synchronisation signal separator 119 comprise comparators 118a and 119a. The comparator 118a forming the binary video signal generator 118 has an inverting input terminal connected via an amplifier AMP to a video output terminal of the switcher 12. A non-inverting input terminal of the comparator 118a is connected to a reference voltage source via a variable resistor 118b. The resistance of the variable resistor 118b can be adjusted via the control panel 18. Depending upon the resistance of the variable resistor 118b, the reference voltage, which serves as a threshold value V1 to be compared with the video signal level, varies. Therefore, by adjusting the resistance of the variable resistor 118b via the control panel 18, the threshold level V1 of the comparator 118a can be adjusted.

The video signal processing system 100 monitors changes in luminance level for detecting changes in the condition of the monitored area. Therefore, the binary video signal is variable between a HIGH level "1" and a LOW level "0" depending upon the luminance level of the video signal. In the illustrated embodiment, a HIGH level signal is outputted when the luminance level of the video signal is higher than the threshold level V1, and a LOW level is outputted when the luminance level of the video signal is lower than the threshold level V1. Therefore, the binary video signal indicates the luminance level at each pixel by a HIGH or a LOW level signal.

The comparator 119a has an inverting input terminal connected to the video output terminal of the switcher 12, via the amplifier AMP, to receive therefrom the video signal. A non-inverting input terminal of the comparator 119a is connected to a reference signal value source Vo and to the anode of a diode 121 whose cathode is connected, via the amplifier AMP, to the output of the switcher 12. As shown in Figure 6, the comparator 119a compares inputs at its inverting and non-inverting input terminals for detecting synchronisation signals contained in the video signal. The comparator 119a outputs a HIGH level pulse signal when a synchronisation signal is detected in the video signal. The HIGH level pulse signal produced by the comparator 119a is hereinafter referred to as the "synchronisation pulse". As set forth, the synchronisation pulse output from the synchronisation signal separator 119 contains the vertical synchronisation signal and the horizontal synchronisation signal. The vertical synchronisation signal is further separated by the vertical synchronisation signal separator 114.

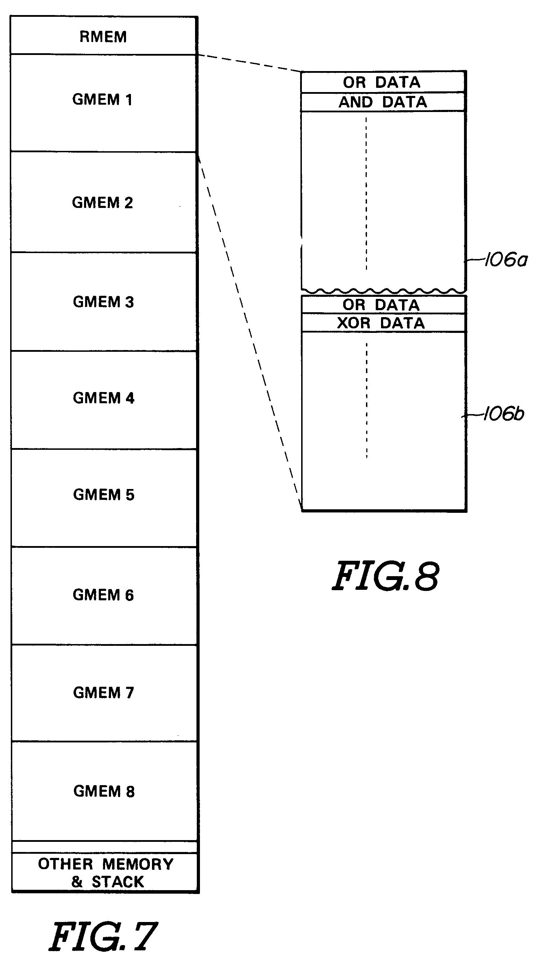

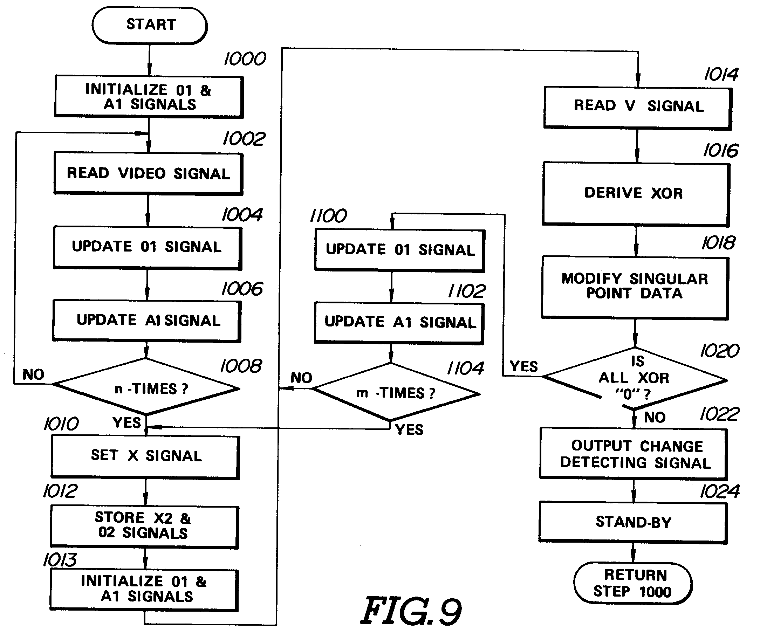

The process for deriving the reference signal which is compared with the video data in the binary video signal outputted from the S/P converter 120 will now be described with reference to Figures 7 to 10. Figure 9 is a flowchart showing the operation of deriving the reference signal. Figure 7 shows the arrangement of the RAM 106, which comprises the memory area RMEM, other memory blocks, address or areas GMEM1, GMEM2 .... GMEMn, other memory and a stack. Figure 8 shows the arrangement of each memory block GMEM1, GMEM2 .... GMEMn in the RAM 106. The video data of the respective monitor channel and the reference signal data corresponding thereto are stored in these memory blocks. Therefore, if a single channel video signal is employed, a single memory block will be used for storing the video data. As shown in Figure 8, each memory block or address GMEM is composed of a first memory area 106a and a second memory area 106b. The first memory area 106a stores data for renewing the reference signal data. The manner of renewing the reference signal data will be described later. The second memory area 106b stores reference signal data in use. As will be fully explained herein, the data stored in the first memory area 106a includes an OR data component (hereinafter referred to as the "O1 signal") and an AND data component (hereinafter referred to as the "A1 signal"). The reference signal data stored in the memory area 106b is composed of the O1 signal and an exclusive OR data component (hereinafter referred to as the "X1 signal"). A pair of O1 and A1 signals stored in the memory area 106a constitutes data representative of the video data. A pair of O1 and X1 signals stored in the memory area 106b constitutes the reference data.

The reference signal data is derived on the basis of the video data for several consecutive video signal fields, as set forth above. Therefore, the video data of a predetermined number n of video signal fields is sampled and stored in the memory area 106a in the form of pairs of O1 and A1 signals. In practice, the logical values (OR data and AND data) of the respective pixels are compared over the n fields of video data. This operation enables pixels whose logical values fluctuate to be detected. In deriving the reference signal, the reference data to be compared with the video data of the pixels for which fluctuation of the logical values are detected will not be derived so that the operation of comparing the video data and the reference data will never take place with regard to such pixels.

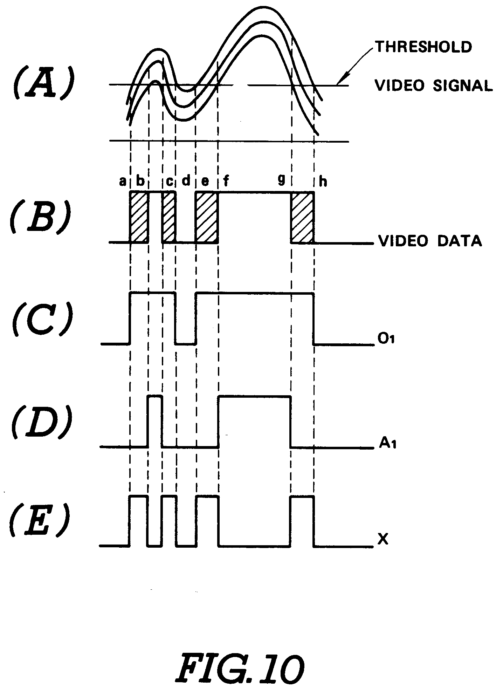

The process of deriving the reference signal and detection of a change of the video data will now be described in further detail with reference to Figures 9 and 10. A program for deriving the reference signal is executed at predetermined intervals by the CPU 104. The program is shown in flow chart form in Figure 9. Upon starting execution, initialisation is performed at a step 1000. In the process of initialisation, the memory area 106a of a memory block GMEM is initialised. Initialisation of the memory area 106a is performed by setting all of the O1 signals to the level "0" and by setting all of the A1 signals to the level "1". At a step 1002, the video data (V signal) of the first video signal field is read out. After this, the logical value of each pixel (i.e. "1" or "0") is compared with the O1 signal in the corresponding address of the memory area 106a and a logical OR operation is performed to derive OR data therebetween. Using the newly derived OR data, the O1 signal is updated at a step 1004. At a step 1006, the logical value of the pixel is compared with the A1 signal of the corresponding address of the memory area 106a and a logical AND operation is performed to derive AND data therebetween. With the newly derived AND data, the A1 signal in the corresponding address in the memory area 106a is updated.

Upon completing the process at the step 1006, a counter (not shown) is incremented by 1. This counter value is compared, at a step 1008, with a given value n which corresponds to the number of video signal fields to be sampled. When the counter value is smaller than n, as determined at the step 1008, the process sequence returns to the step 1002 to repeat the processes of the steps 1002 to 1006 for the next video signal field. Therefore, the O1 signal and the A1 signal are updated n times. When the counter value reaches the given value n, as determined at the step 1008, the process goes to a step 1010.

In the step 1010, a logical exclusive OR operation is performed on the O1 signal and the A1 signal to derive the exclusive OR data. The newly derived exclusive OR data is set as an X signal at a step 1010. After this, at a step 1012, the O1 signal (as updated in the step 1004) and the X signal (as derived in the step 1010) are stored, respectively, as an O2 signal and an X2 signal in the second memory area 106b of the GMEM memory block. The O2 signal and the X2 signal serve as the reference data for the corresponding pixel. After completion of the process in the step 1012, all of the O1 signals in the first memory area 106a are set to "0" and all of the A1 signals in the first memory area 106b are set to "1", at a step 1013.

The O1 signal, which was updated n-times at the step 1004, will have a value of "0" only when the OR values derived n-times are all of value "0", as shown at (A) to (C) in Figure 10. The A1 signal will have a value of "1" only when all of the items AND data derived n-times at the step 1006 are of the value "1", as shown at (A), (B) and (D) in Figure 10. Similarly, the X1 signal as derived in the step 1010 will have a value of "0" when the logical level of the video data over n-fields is held unchanged at the value "1" or the value "0", and will have a value of "1" when the logical value fluctuates among n fields of video data.

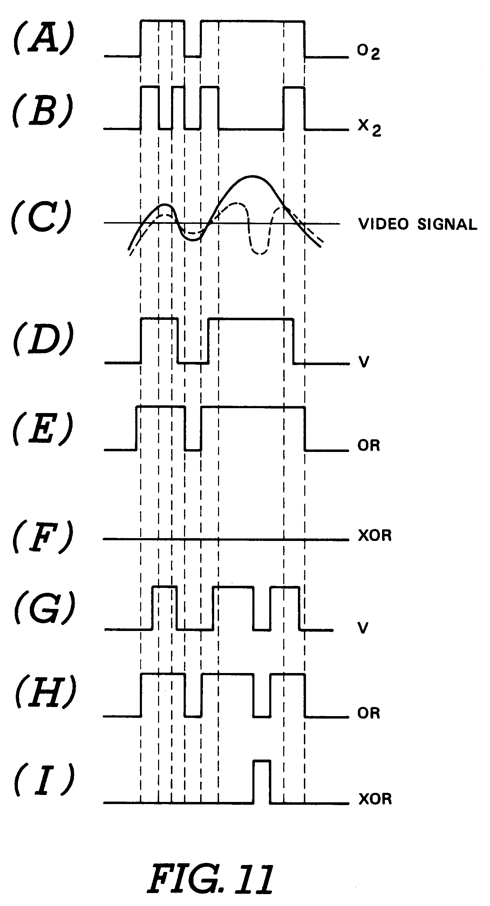

At a step 1014, the video data (V signal) of the subsequent field of the video signal is read out. After this, the logical value of each pixel is compared with the X2 signal in the corresponding address of the second memory area 106b and a logical OR operation is performed to derive OR data therebetween, as shown at (A), (B), (C), (D), (E) and (G) in Figure 11. An exclusive OR logic operation is performed with respect to the derived OR data and the O2 signal to derive exclusive OR (XOR) data thereof at a step 1016, as shown at (E) and (F) in Figure 11. The XOR data derived with respect to each pixel is checked for finding out singular points in relation to the adjacent pixels, at a step 1018. In practice, a singular point is checked by comparing the XOR data derived in the step 1016 with the XOR data of the adjacent pixels. As shown at (D), (E) and (F) in Figure 11, when the video data is held unchanged, an XOR operation performed on the OR data and the O2 signal as derived in the step 1016 will produce "0" for all of the pixels. As shown at (G), (H) and (I) in Figure 11, the XOR data will become "1" for a pixel whose video data changes.

It is unlikely in a security monitor system for there to be a change in the video data for only one pixel while the video data of the adjacent pixels surrounding the changed pixel is unchanged. Therefore, when the XOR data of the pixel to be checked is "1" and the XOR data of all of the adjacent pixels is "0", it is determined that the checked pixel is a singular point. In such case, the XOR data is modified to harmonise with the XOR data of the adjacent pixels.

After the process in the step 1018, the XOR data obtained for all the pixels is checked to determine whether all of the items of XOR data have the value "0", which would indicate that no video data has changed. If all of the items of XOR data have the value "0", then the process goes to a step 1100. In the step 1100, the logical value of the video signal is compared with the O1 signal to obtain OR data for updating the O1 signal with the obtained OR data. At a step 1102, the logical value of the video signal is compared with the A1 signal to obtain AND data for updating the A1 signal with the obtained AND data. Upon completing the process in the step 1102, a counter (not shown) is incremented by "1". After this, the counter value is compared with a given value m at a step 1104. If the counter value is smaller than m, the process goes back to the step 1014 to repeat the process through the steps 1014, 1016, 1018, 1020, 1100 and 1102. If the counter value is equal to m, the process goes to the step 1010.

When at least one of the items of XOR data has the value "1", as checked at the step 1020, the process goes to a step 1022, in which a change detection signal is outputted. After outputting the change detection signal, the security monitor system is placed in a stand-by state for a given period of time. After expiry of the given stand-by period, the process returns to the step 1000 to resume security monitoring operations.

Although the illustrated embodiment determines that the condition of the monitoring area has changed when a change of the video data in a least one pixel is detected, it would be possible slightly to reduce the sensitivity in order to avoid the influence of signal noise which can be superimposed on the video signal from the camera. This can be done by counting the number of pixels for which the video data is changed and comparing the counted value with a given threshold value. This technique is substantially the same as that discussed above in regard to the prior art. However, since the illustrated embodiment successfully avoids monitoring pixels for which the video data fluctuates, the threshold value to be used can be small enough to yield a satisfactorily high sensitivity.

## Claims

1. A method of processing a video signal for detecting a change in the video data contained in a video signal generated by a video signal source, the method comprising the steps of:
converting (118) an analog video signal received from the video signal source into a corresponding binary value digital video signal containing logical values representative of the signal level of the respective pixels;
generating (102) a digital reference signal by sampling a predetermined number (n) of video signal fields in the digital video signal, comparing the sampled predetermined number of video signal fields and excluding those pixels whose corresponding video data fluctuates in the sampled video signal fields so that a comparing step between a video signal field and the reference signal takes place only for those pixels whose video data is held constant over the sampled fields and the digital reference signal is produced on the basis of the video data of the sampled predetermined number of video signal fields, said reference signal containing a data component (O2, X2) for each pixel, which data component is composed of an OR data component (O2) of corresponding logical values of the sampled video signal fields and an exclusive OR data component (X2) of the OR data component and AND data components (A1) of the logical values of the sampled video signal fields: and
detecting (102) a change in the video data in the video signal by comparing each video signal field with the reference signal and producing a change detection signal when a change in the video data is detected.

2. A method according to claim 1, wherein the step of generating a reference signal further comprises the steps (1013) of setting initial values for the OR data components (O1) and the AND data components (A1) for all of the pixels so that the derived exclusive OR data component (XOR) becomes a predetermined value when the video data of all the pixels are held unchanged.

3. A method according to claim 1 or claim 2, wherein the change detecting step comprises the further steps of receiving (1014) the digital video signal and performing a logical OR operation (1016) to derive an OR data component (O2) of the logical value and the exclusive OR data component of the reference signal with respect to each pixel and performing a logical exclusive OR operation to derive an exclusive OR (XOR) data component of the derived OR data and the OR data component of the reference signal, and checking (1018) the thus derived exclusive OR data (XOR) for detecting a change in the video data with respect to each pixel to determine singular points of change.

4. A method according to claim 3, wherein the detecting step comprises the further steps of comparing (1020) the derived exclusive OR data (XOR) of each pixel with the predetermined value for detecting a change in the video data and generating a change detection signal.

5. A method according to any one of the preceding claims, further comprising the step of generating the source video signal by directing a video camera (10) toward a predetermined monitoring area to be monitored, picking-up a video image thereof and generating a corresponding video signal containing video data; and
in response to the change detection signal, generating an alarm (20) indicative of a change in the condition in the monitoring area.

6. A method according to claim 5, wherein source video signal generating step further comprises the steps of directing a plurality of cameras (10) to different monitoring areas for picking up separate video images thereof and switching connections between the cameras and the video signal processing system according to a predetermined schedule.

7. A method according to claim 6, further comprising the steps of recording the current video signal upon the occurrence of the change detection signal.

8. A method according to claim 7, wherein the recording step comprises printing a video image of the monitoring area on the basis of the current video signal at the occurrence of the change detection signal.

9. A method according to claim 7 or claim 8, wherein the recording step comprises recording the current video signal for a given period of time by means of a video tape recorder in response to the change detection signal.

10. A method according to any one of the preceding claims, further comprising the step of reproducing the video signal for visual observation of the monitoring area.

11. A method according to any one of the preceding claims, wherein the detecting steps is limited to only monitoring a change in the video data for the pixels in a limited section of one video signal field.

12. A method according to claim 11, wherein the reference signal generating step further comprises generating the reference signal only with respect to reference data of the pixels within the limited section.

13. A method according to claim 12, wherein the reference signal generating step further comprises storing video data of the pixels within the limited section in a first digital memory block (RMEM) and storing the reference signal in a second memory block (GMEM).

14. A method according to claim 12 or claim 13, wherein the reference signal generating step further comprises the steps of separating synchronisation signals in the video signal, receiving the separated synchronisation signals and detecting pixel positions in one field of the video image whereby the video data corresponding to the pixels within the limited section is detected and stored in the first memory block (RMEM).

15. A video signal processing system for processing a video signal for detecting a change in the video data contained in a video signal generated by a video signal source, the system comprising:
convertor means (118) for converting an analog video signal received from the video signal source into a corresponding binary value digital video signal containing logical values representative of the signal level of the respective pixels;
reference signal generator means (102) for generating a digital reference signal by sampling a predetermined number (n) of video signal fields in the digital video signal, comparing the sampled predetermined number of video signal fields and excluding those pixels whose corresponding video data fluctuates in the sampled video signal fields so that a comparing step between a video signal and the reference signal takes place only for those pixels whose video data is held constant over the sampled fields and producing the digital reference signal on the basis of the video data of the sampled predetermined number of video signal fields; and
detector means (102) for detecting a change in the video data in the video signal by comparing each video signal field with the reference signal and producing a change detection signal when a change in the video signal is detected, characterised in that said generating means generates a said reference signal containing a data component (O2, X2) for each pixel, which data component is composed of an OR data component (O2) of corresponding logical values of the sampled video signal fields and an exclusive OR data component (X2) of the OR data component and AND data components (A1) of the logical values of the sampled video signal fields.

16. A system according to claim 15, wherein the reference signal generator means (102) is operative (1013) to set initial values for the OR data components (O1) and the AND data components (A1) for all of the pixels so that the derived exclusive OR data component (XOR) becomes a predetermined value when the video data of all of the pixels is held unchanged.

17. A system according to claim 15 or claim 16, wherein the detector means (102) is operative (1014) to receive the digital video signal, to perform a logical OR operation to derive an OR data component of the logical value and the exclusive OR data component (X2) of the reference signal with respect to each pixel, to perform a logical OR operation (1016) to derive an exclusive OR data component (XOR) of the derived OR data and the OR data component (O2) of the reference signal, and to check (1018) the thus derived exclusive OR data (XOR) for detecting a change in the video data with respect to each pixel to determine singular points of change.

18. A system according to claim 17, wherein the detector means (102) is operative (1020) to compare the derived exclusive OR data (XOR) of each pixel with the predetermined value for detecting a change in the video data.

19. A security monitor system comprising:
a video signal camera (10) directed towards a predetermined area to be monitored for picking up a video image thereof and generating a corresponding video signal containing video data;
a video signal processing system (100) according to any one of claims 15-18 arranged for detecting a change in the video data contained in the video signal from the video signal camera (10); and
an alarm (20) responsive to a change detection signal produced by the detector means (102) of the video signal processing system (100) to indicate a change in the condition of the monitored area.

20. A system according to claim 19, comprising a plurality of video signal cameras (10) directed to different predetermined areas to be monitored for picking up separate video images and a switcher means (12) for switching connections between the cameras and the video signal processing system (100) according to a predetermined schedule.

21. A system according to any one of claims 15-20, which comprises a recording means (16) operative to record the current video signal upon occurrence of the change detection signal.

22. A system according to claim 21, wherein the recording means (16) comprises a video printer (24) for printing a video image on the basis of the current video signal upon occurrence of a change detection signal.

23. A system according to claim 21, wherein the recording means (16) comprises a video tape recorder which is responsive to a change detection signal to record the current video signal for a given period of time.

24. A system according to any one of claims 15-23, which comprises a video monitor (14) for reproducing the video signal generated by the video signal source.

25. A system according to any one of claims 15-24, which is operative to monitor change in the video data for the pixels in a limited section (Figure 3) of one video signal field.

26. A system according to claim 25, so operative that the reference signal generated by the reference signal generator means (102) contains only reference data of the pixels within the limited section (Figure 3).

27. A system according to claim 26, which comprises a memory (106) having a first memory block (RMEM) for storing video data of the pixels within the limited section (Figure 3) and a second memory block (GMEM) for storing the reference signal.

28. A system according to claim 27, which includes a synchronisation signal separator (119) for separating synchronisation signals from the video signal and a pixel coordinate detection means (110) for receiving the synchronisation signals separated by the synchronisation signal separator (119) and detecting pixel positions in one field of the video image whereby the video data corresponding to the pixels within the limited section (Figure 3) is detected and stored in the first memory block (RMEM) of the memory means (106).

## Patentansprüche

1. Verfahren zur Bearbeitung eines Videosignales zur Detektion einer Anderung in den in einem durch eine Videosignalquelle erzeugten Videosignal enthaltenen Videodaten mit folgenden Schritten:
Umwandlung (118) eines von einer Videosignalquelle erhaltenen analogen Videosignales in ein korrespondierendes digitales Binärwertvideosignal, das für den Signalpegel der entsprechenden Pixel repräsentative logische Werte enthält;
Erzeugung (102) eines digitalen Bezugssignales durch Abtasten einer vorbestimmten Anzahl (n) von Videosignalfeldern in dem digitalen Videosignal, Vergleich der abgetasteten vorbestimmten Anzahl von Videosignalfeldern und Ausschluß von solchen Pixeln, deren korrespondierende Videodaten in den abgetasteten Videosignalfeldern schwanken, so daß ein Vergleichsschritt zwischen einem Videosignalfeld und dem Bezugssignal nur für solche Pixel stattfindet, deren Videodaten über die abgetasteten Felder konstant gehalten werden, und das digitale Bezugssignal wird auf der Basis der Videodaten der abgetasteten vorbestimmten Anzahl von Videosignalfeldern erstellt, wobei besagtes Bezugssignal einen Datenbestandteil (02, X2) für jedes Pixel enthält, der Datenbestandteil aus einem OR-Datenbestandteil (02) von korrespondierenden logischen Werten der abgetasteten Videosignalfelder und einem exklusiven OR-Datenbestandteil (X2) des OR-Datenbestandteiles und AND-Datenbestandteilen (A1) der logischen Werte der ausgelesenen Videosignalfelder zusammengesetzt ist; und
Detektion (102) einer Änderung in den Videodaten des Videosignales durch Vergleich eines jeden Videosignalfeldes mit dem Bezugssignal und der Erzeugung eines Änderungsdetektionssignales, wenn eine Änderung in den Videodaten detektiert worden ist.

2. Verfahren nach Anspruch 1, wobei der Schritt der Erzeugung eines Bezugssignales des weiteren die Schritte (1013) zum Einrichten von Initialwerten für die OR-Datenbestandteile (01) und die AND-Datenbestandteile (A1) für alle Pixel enthält, so daß der abgeleitete exklusive OR-Datenbestandteil (XOR) zu einem vorbestimmten Wert wird, wenn die Videodaten aller Pixel unverändert gehalten werden.

3. Verfahren nach Anspruch 1 oder 2, wobei der Änderungsdetektionsschritt des weiteren folgende Schritte enthält:
Empfang (1014) des digitalen Audiosignales und
Ausführung eines logischen OR-Vorganges (1016) zur Ableitung eines OR-Datenbestandteiles (02) des logischen Wertes und des exklusiven OR-Datenbestandteiles des Bezugssignales in bezug auf jedes Pixel und
Ausführung eines logischen exklusiven OR-Vorganges zur Ableitung eines exklusiven OR-Datenbestandteiles (XOR) der abgeleiteten OR-Daten und des OR-Datenbestandteiles des Bezugssignales, und
Überprüfung (1018) der derart abgeleiteten exklusiven OR-Daten (XOR) zur Detektion einer Änderung in den Videodaten unter Bezug auf jedes Pixel, um einzelne veränderte Punkte zu bestimmen.

4. Verfahren nach Anspruch 3, worin der Detektionsschritt den weiteren Schritt des Vergleiches (1020) der abgeleiteten exklusiven OR-Daten (XOR) eines jeden Pixels mit dem vorbestimmten Wert zur Detektion einer Änderung in den Videodaten und die Erzeugung eines Änderungsdetektionssignales beinhaltet.

5. Verfahren nach einem der vorhergehenden Ansprüche, wobei der weitere Schritt der Erzeugung des Quellenvideosignales durch die Ausrichtung einer Videokamera (10) in Richtung auf eine vorbestimmte Überwachungszone, die beobachtet werden soll, Aufnahme eines Videobildes davon und Erzeugung eines korrespondierenden Videosignal, das Videodaten enthält, beinhaltet ist; und als Antwort auf das Änderungsdetektionssignal die Erzeugung eines Alarmes (20), der eine Änderung in den Bedingungen in der Überwachungszone anzeigt.

6. Verfahren nach Anspruch 5, worin der Schritt zur Erzeugung eines Quellenvideosignales weiterhin die Schritte der Ausrichtung einer Vielzahl von Kameras (10) auf verschiedene Überwachungszonen zur Aufnahme von separaten Videobildern derselben und der Schaltung von Verbindungen zwischen den Kameras und dem Videosignalbearbeitungssystem entsprechend einem vorgegebenen Plan umfaßt.

7. Verfahren nach Anspruch 6, wobei weiterhin der Schritt der Aufzeichnung des laufenden Videosignals beim Auftauchen des Änderungsdetektionssignales enthalten ist.

8. Verfahren nach Anspruch 7, wobei der Aufzeichnungsschritt den Ausdruck eines Videobildes der Überwachungszone auf der Basis des laufenden Videosignales bei dem Auftreten des Änderungsdetektionssignales umfaßt.

9. Verfahren nach Anspruch 7 oder 8, wobei der Aufzeichnungsschritt die Aufzeichnung des laufenden Videosignales für eine vorgegebene Zeitdauer mittels eines Videobandaufzeichnungsgerätes als Antwort auf das Änderungsdetektionssignal umfaßt.

10. Verfahren nach einem der vorhergehenden Ansprüche, wobei weiterhin der Schritt der Wiedergabe des Videosignales für die visuelle Beobachtung der Überwachungszone enthalten ist.

11. Verfahren nach einem der vorhergehenden Ansprüche, worin der Detektionsschritt darauf begrenzt wird, nur eine Änderung in den Videodaten für die Pixel in einem begrenzten Ausschnitt eines Videosignalfeldes zu überwachen.

12. Verfahren nach Anspruch 11, worin der Bezugssignalerzeugungsschritt weiterhin die Bildung des Bezugssignales nur in bezug auf Referenzdaten von Pixeln innerhalb des begrenzten Ausschnittes umfaßt.

13. Verfahren nach Anspruch 12, worin der Bezugssignalerzeugungsschritt weiterhin die Speicherung von Videodaten der Pixel innerhalb des begrenzten Ausschnittes in einem ersten digitalen Speicherblock (RMEM) und die Speicherung des Bezugssignales in einem zweiten Speicherblock (GMEM) umfaßt.

14. Verfahren nach Anspruch 12 oder 13, worin dar Bezugssignalerzeugungsschritt weiterhin die Schritte der Abtrennung des Synchronisationssignales in dem Videosignal, des Empfanges des abgetrennten Synchronisationssignales und der Detektion der Pixelpositionen in einem Feld des Videobildes umfaßt, wobei die mit den Pixeln innerhalb des begrenzten Ausschnittes korrespondierenden Videodaten detektiert und in dem ersten Speicherblock (RMEM) gespeichert werden.

15. Videosignalbearbeitungssystem zur Bearbeitung eines Videosignales zur Detektion einer Änderung in den in einem durch eine Videosignalquelle erzeugten Videosignal enthaltenen Videodaten, wobei das System folgendes umfaßt:
Umwandlungsmittel (118) zum Umwandeln eines von der Videosignalquelle empfangenen analogen Videosignales in ein korrespondierendes digitales Binärwertvideosignal, das für den Signalpegel der entsprechenden Pixel repräsentative logische Werte enthält;
Bezugssignalerzeugungsmittel (102) zur Bildung eines digitalen Bezugssignales durch Abtasten einer vorbestimmten Anzahl (n) von Videosignalfeldern in dem digitalen Videosignal, durch Vergleich der abgetasteten vorbestimmten Anzahl von Videosignalfeldern und durch Ausschluß von solchen Pixeln, deren korrespondierende Videodaten in den abgetasteten Videosignalfeldern schwanken, so daß ein Vergleichsschritt zwischen einem Videosignal und dem Bezugssignal nur für solche Pixel stattfindet, deren Videodaten über die abgetasteten Felder konstant gehalten werden und durch Erzeugung des digitalen Referenzsignales auf der Basis der Videodaten der abgetasteten vorbestimmten Anzahl von Videosignalfeldern; und
Detektionsmittel (102) zur Detektion einer Änderung in den Videodaten in dem Videosignal durch Vergleich jedes Videosignalfeldes mit dem Referenzsignal und durch Erzeugung eines Änderungsdetektionssignales, wenn eine Änderung in dem Videosignal detektiert wird, **dadurch gekennzeichnet,**
daß besagte Erzeugungsmittel ein besagtes Referenzsignal erzeugen, das einen Datenbestandteil (02, X2) für jedes Pixel enthält, der aus einem OR-Datenbestandteil (02) von korrespondierenden logischen Werten der abgetasteten Videodatenfelder und aus einem exklusiven OR-Datenbestandteil (X2) des OR-Datenbestandteiles und aus AND-Datenbestandteilen (A1) der logischen Werte der abgetasteten Videosignalfelder zusammengesetzt ist.

16. System nach Anspruch 15, worin das Bezugszeichenerzeugungsmittel (102) derart wirkt (1013), daß für die OR-Datenbestandteile (01) und die AND-Datenbestandteile (A1) für alle Pixel Initialwerte gesetzt werden, so daß der abgeleitete exklusive OR-Datenbestandteil (XOR) einen vorbestimmten Wert erhält, wenn die Videodaten von allen Pixeln unverändert gehalten werden.

17. System nach Anspruch 15 oder 16, worin das Detektionsmittel (102) derart wirkt (1014), daß es das digitale Videosignal empfängt, um eine logische OR-Bearbeitung auszuführen, um einen OR-Datenbestandteil des logischen Wertes und des exklusiven OR-Datenbestandteiles (X2) des Bezugssignales bezüglich eines jeden Pixels abzuleiten, um eine logische OR-Bearbeitung (1016) auszuführen, um einen exklusiven OR-Datenbestandteil (XOR) der abgeleiteten OR-Daten und des OR-Datenbestandteiles (02) des Bezugssignales abzuleiten, und die derart abgeleiteten exklusiven OR-Daten (XOR) zur Detektion einer Änderung in den Videodaten bezüglich eines jeden Pixels überprüft, um einzelne geänderte Punkte zu bestimmen.

18. System nach Anspruch 17, worin das Detektionsmittel (102) derart wirkt (1020), daß die abgeleiteten exklusiven OR-Daten (XOR) für jedes Pixel mit dem vorbestimmten Wert zur Detektion einer Änderung in den Videodaten verglichen wird.

19. Sicherheitsüberwachungssytem, das folgendes umfaßt:
eine Videosignalkamera (10), die auf eine vorbestimmte zu beobachtende Zone ausgerichtet ist zur Aufnahme eines Videobildes davon und zur Erzeugung eines korrespondierenden Videosignales, das Videodaten enthält;
ein Videosignalbearbeitungssystem (100) nach einem der Ansprüche 15 bis 18, das zur Detektion einer Änderung in den Videodaten, die in dem Videosignal von der Videosignalkamera (10) enthalten sind, eingerichtet ist; und
ein Alarm (20), der auf ein Änderungsdetektionssignal anspricht, das durch das Detektionsmittel (102) des Videosignalbearbeitungssystemes (100) erzeugt wird, um eine Änderung in den Bedingungen der Überwachungszone anzuzeigen.

20. System nach Anspruch 19, das eine Vielzahl von Videosignalkameras (10) enthält, die auf verschiedene vorbestimmte zu überwachende Zonen ausgerichtet sind, um separate Videobilder aufzunehmen, und ein Schaltungsmittel (12) zur Schaltung von Verbindungen zwischen den Kameras und dem Videosignalbearbeitungssystem (100) entsprechend einem vorbestimmten Plan.

21. System nach einem der Ansprüche 15 bis 20, das Aufzeichnungsmittel (16) enthält, die derart wirken, daß die Aufzeichnung des laufenden Videosignales stattfindet, wenn das Änderungsdetektionssignal auftritt.

22. System nach Anspruch 21, worin das Aufzeichnungsmittel (16) einen Videodrucker (24) zum Drucken eines Videobildes auf der Basis des laufenden Videosignales, wenn das Änderungsdetektionssignal auftritt, enthält.

23. System nach Anspruch 21, worin das Aufzeichnungsmittel (16) einen Videobandrecorder umfaßt, der auf ein Änderungsdetektionssignal hin anspricht, um das laufende Videosignal für einen gegebenen Zeitraum aufzuzeichnen.

24. System nach einem der Ansprüche 15 bis 23, das einen Videomonitor (14) zur Wiedergabe des durch die Videosignalquelle erzeugten Videosignales umfaßt.

25. System nach einem der Ansprüche 15 bis 24, das derart wirkt, daß eine Änderung in den Videodaten für die Pixel in einem begrenzten Ausschnitt (Figur 3) eines Videosignalfeldes überwacht wird.

26. System nach Anspruch 25, das derart wirkt, daß das durch das Bezugssignalerzeugungsmittel (102) gebildete Bezugssignal nur Bezugsdaten der Pixel innerhalb des begrenzten Ausschnittes enthält (Figur 3).

27. System nach Anspruch 26, das einen Speicher (106) enthält mit einem ersten Speicherblock (RMEM) zur Speicherung von Videodaten von Pixeln innerhalb des begrenzten Ausschnittes (Figur 3) und einem zweiten Speicherblock (GMEM) zur Speicherung des Bezugssignales.

28. System nach Anspruch 27, das einen Synchronisationssignalseparator (119) zur Abtrennung von Synchronisationssignalen von dem Videosignal und ein Pixelkoordinatendetektionsmittel (110) zum Empfang der Synchronisationssignale, die durch den Synchronisationssignalgenerator (119) abgetrennt worden sind, beinhaltet und Pixelpositionen in einem Feld des Videobildes detektiert, wobei die mit den Pixeln innerhalb des begrenzten Ausschnittes (Figur 3) korrespondierenden Videodaten detektiert werden und in den ersten Speicherblock (RMEM) der Speichermittel (106) gespeichert werden.

## Revendications

1. Procédé de traitement d'un signal vidéo pour détecter une modification dans les données vidéo contenues dans un signal vidéo généré par une source de signal vidéo, le procédé comprenant les étapes de :
conversion (118) d'un signal vidéo analogique reçu depuis la source de signal vidéo en un signal vidéo numérique en valeurs binaires correspondant contenant des valeurs logiques représentatives du niveau de signal des pixels respectifs ;
génération (102) d'un signal de référence numérique en échantillonnant un nombre prédéterminé (n) de trames de signal vidéo contenues dans le signal vidéo numérique, en soumettant à une comparaison le nombre prédéterminé de trames de signal vidéo échantillonnées et en excluant les pixels dont les données vidéo correspondantes fluctuent dans les trames de signal vidéo échantillonnées de telle sorte qu'une étape de comparaison entre une trame de signal vidéo et le signal de référence soit effectuée seulement pour les pixels dont les données vidéo sont maintenues constantes sur les trames échantillonnées et le signal de référence numérique est produit sur la base des données vidéo du nombre prédéterminé de trames de signal vidéo échantillonnées, ledit signal de référence contenant une composante de données (O2, X2) pour chaque pixel, laquelle composante de données est constituée par une composante de données OU (O2) des valeurs logiques correspondantes des trames de signal vidéo échantillonnées et par une composante de données OU-exclusif (X2) de la composante de données OU et par des composantes de données ET (A1) des valeurs logiques des trames de signal vidéo échantillonnées ; et
détection (102) d'une modification dans les données vidéo contenues dans le signal vidéo en comparant chaque trame de signal vidéo au signal de référence et en produisant un signal de détection de modification lorsqu'une modification dans les données vidéo est détectée.

2. Procédé selon la revendication 1, dans lequel l'étape de génération d'un signal de référence comprend en outre les étapes (1013) d'établissement de valeurs initiales pour les composantes de données OU (O1) et pour les composantes de données ET (A1) pour tous les pixels de telle sorte que la composante de données OU-exclusif dérivée (XOU) devienne une valeur prédéterminée lorsque les données vidéo de tous les pixels sont maintenues non modifiées.

3. Procédé selon la revendication 1 ou 2, dans lequel l'étape de détection de modification comprend les étapes supplémentaires de réception (1014) du signal vidéo numérique et de réalisation d'une opération OU logique (1016) pour dériver une composante de données OU (O2) de la valeur logique et la composante de données OU-exclusif du signal de référence par rapport à chaque pixel et de réalisation d'une opération OU-exclusif logique pour dériver une composante de données OU-exclusif (XOU) des données OU dérivées et la composante de données OU du signal de référence, et de contrôle (1018) des données OU-exclusif (XOU) ainsi dérivées pour détecter une modification dans les données vidéo par rapport à chaque pixel afin de déterminer des points singuliers de modification.

4. Procédé selon la revendication 3, dans lequel l'étape de détection comprend les étapes supplémentaires de comparaison (1020) des données OU-exclusif (XOU) dérivées de chaque pixel à la valeur prédéterminée pour détecter une modification des données vidéo et pour générer un signal de détection de modification.

5. Procédé selon l'une quelconque des revendications précédentes, comprenant en outre l'étape de génération de signal vidéo source en détectant une caméra vidéo (10) en direction d'une zone de surveillance prédéterminée qui doit être surveillée, en captant une image vidéo de celle-ci et en générant un signal vidéo correspondant contenant des données vidéo ; et
en réponse au signal de détection de modification, génération d'une alarme (20) indicative d'une modification dans la condition de la zone de surveillance.

6. Procédé selon la revendication 5, dans lequel l'étape de génération de signal vidéo source comprend en outre des étapes d'orientation d'une pluralité de caméras (10) sur des zones de surveillance différentes pour capter des images vidéo séparées de celles-ci, et de commutation de connexions entre les caméras et le système de traitement de signal vidéo conformément à une règle prédéterminée.

7. Procédé selon la revendication 6, comprenant en outre des étapes d'enregistrement du signal vidéo courant lors de la survenue du signal de détection de modification.

8. Procédé selon la revendication 7, dans lequel l'étape d'enregistrement comprend l'impression d'une image vidéo de la zone de surveillance sur la base du signal vidéo courant lors de la survenue du signal de détection de modification.

9. Procédé selon la revendication 7 ou 8, dans lequel l'étape d'enregistrement comprend l'enregistrement du signal vidéo courant pour une période temporelle donnée au moyen d'un enregistreur à bande vidéo en réponse au signal de détection de modification.

10. Procédé selon l'une quelconque des revendications précédentes, comprenant en outre l'étape de reproduction du signal vidéo en vue d'une observation visuelle de la zone de surveillance.

11. Procédé selon l'une quelconque des revendications précédentes, dans lequel l'étape de détection est limitée à la seule surveillance d'une modification dans les données vidéo pour les pixels contenus dans une section limitée d'une trame de signal vidéo.

12. Procédé selon la revendication 11, dans lequel l'étape de génération de signal de référence comprend en outre la génération du signal de référence seulement par rapport à des données de référence des pixels contenus dans la section limitée.

13. Procédé selon la revendication 12, dans lequel l'étape de génération de signal de référence comprend en outre le stockage de données vidéo des pixels contenus dans la section limitée dans un premier bloc mémoire numérique (RMEM) et le stockage du signal de référence dans un second bloc mémoire (GMEM).

14. Procédé selon la revendication 12 ou 13, dans lequel l'étape de génération de signal de référence comprend en outre les étapes de séparation de signaux de synchronisation contenus dans le signal vidéo, de réception des signaux de synchronisation séparés et de détection de positions de pixels dans une trame de l'image vidéo et ainsi, les données vidéo correspondant aux pixels contenus dans la section limitée sont détectées et stockées dans le premier bloc mémoire (RMEM).

15. Système de traitement de signal vidéo pour traiter un signal vidéo pour détecter une modification des données vidéo contenues dans un signal vidéo généré par une source de signal vidéo, le système comprenant :
un moyen de convertisseur (118) pour convertir un signal vidéo analogique reçu depuis la source de signal vidéo en un signal vidéo numérique en valeurs binaires correspondant contenant des valeurs logiques représentatives du niveau de signal des pixels respectifs ;
un moyen de générateur de signal de référence (102) pour générer un signal de référence numérique en échantillonnant un nombre prédéterminé (n) de trames de signal vidéo contenues dans le signal vidéo numérique, en comparant le nombre prédéterminé échantillonné de trames de signal vidéo et en excluant les pixels dont les données vidéo correspondantes fluctuent dans les trames de signal vidéo échantillonnées de telle sorte qu'une étape de comparaison entre un signal vidéo et le signal de référence soit effectuée seulement pour les pixels dont les données vidéo sont maintenues constantes sur les trames échantillonnées, en produisant le signal de référence numérique sur la base des données vidéo du nombre prédéterminé de trames de signal vidéo échantillonnées ; et
un moyen de détecteur (102) pour détecter une modification dans les données vidéo contenues dans le signal vidéo en comparant chaque trame de signal vidéo au signal de référence et en produisant un signal de détection de modification lorsqu'une modification dans le signal vidéo est détectée, caractérisé en ce que ledit moyen de génération génère un dit signal de référence contenant une composante de données (O2, X2) pour chaque pixel, laquelle composante de données est constituée par une composante de données OU (O2) de valeurs logiques correspondantes des trames de signal vidéo échantillonnées et par une composante de données OU-exclusif (X2) de la composante de données OU et par des composantes de données ET (A1) des valeurs logiques des trames de signal vidéo échantillonnées.

16. Système selon la revendication 15, dans lequel le moyen de générateur de signal de référence (102) fonctionne (1013) pour établir des valeurs initiales pour les composantes de données OU (O1) et pour les composantes de données ET (A1) pour tous les pixels de telle sorte que la composante de données OU-exclusif dérivée (XOU) devienne une valeur prédéterminée lorsque les données vidéo de tous les pixels sont maintenues non modifiées.

17. Système selon la revendication 15 ou 16, dans lequel le moyen de détecteur (102) fonctionne (1014) pour recevoir le signal vidéo numérique, pour réaliser une opération OU logique afin de dériver une composante de données OU de la valeur logique et de la composante de données OU-exclusif (X2) du signal de référence par rapport à chaque pixel, pour réaliser une opération OU logique (1016) afin de dériver une composante de données OU-exclusif (XOU) des données OU dérivées et de la composante de données OU (O2) du signal de référence et pour contrôler (1018) les données OU-exclusif ainsi dérivées (XOU) pour détecter une modification dans les données vidéo par rapport à chaque pixel afin de déterminer des points singuliers de modification.

18. Système selon la revendication 17, dans lequel le moyen de détecteur (102) fonctionne (1020) pour comparer les données OU-exclusif dérivées (XOU) de chaque pixel à la valeur prédéterminée pour détecter une modification dans les données vidéo.

19. Système de surveillance de sécurité comprenant :
une caméra de signal vidéo (10) orientée en direction d'une zone prédéterminée qui doit être surveillée pour capter une image vidéo de cette zone et pour générer un signal vidéo correspondant contenant des données vidéo ;
un système de traitement de signal vidéo (100) selon l'une quelconque des revendications 15 à 18, agencé pour détecter une modification dans les données vidéo contenues dans le signal vidéo en provenance de la caméra de signal vidéo (10) ; et
une alarme (20) sensible à un signal de détection de modification produit par le moyen de détecteur (102) du système de traitement de signal vidéo (100) afin d'indiquer une modification dans la condition de la zone surveillée.

20. Système selon la revendication 19, comprenant une pluralité de caméras de signal vidéo (10) dirigées sur différentes zones prédéterminées qui doivent être surveillées pour capter des images vidéo séparées et un moyen de commutateur (12) pour commuter des connexions entre les caméras et le système de traitement de signal vidéo (100) conformément à une règle prédéterminée.

21. Système selon l'une quelconque des revendications 15 à 20, lequel comprend un moyen d'enregistrement (16) qui fonctionne pour enregistrer le signal vidéo courant suite à la survenue du signal de détection de modification.

22. Système selon la revendication 20, dans lequel le moyen d'enregistrement (16) comprend une imprimante vidéo (24) pour imprimer une image vidéo sur la base du signal vidéo courant suite à la survenue d'un signal de détection de modification.

23. Système selon la revendication 21, dans lequel le moyen d'enregistrement (16) comprend un enregistreur à bande vidéo qui est sensible à un signal de détection de modification pour enregistrer le signal vidéo courant pendant une période temporelle donnée.

24. Système selon l'une quelconque des revendications 15 à 23, lequel comprend un moniteur vidéo (14) pour reproduire le signal vidéo généré par la source de signal vidéo.

25. Système selon l'une quelconque des revendications 15 à 24, lequel fonctionne pour surveiller une modification dans les données vidéo pour les pixels situés dans une section limitée (figure 3) d'une trame de signal vidéo.

26. Système selon la revendication 25, lequel fonctionne de telle sorte que le signal de référence généré par le moyen de générateur de signal de référence (102) contienne seulement des données de référence des pixels situés dans la section limitée (figure 3).

27. Système selon la revendication 26, lequel comprend une mémoire (106) comportant un premier bloc mémoire (RMEM) pour stocker les données vidéo des pixels contenus dans la section limitée (figure 3) et un second bloc mémoire (GMEM) pour stocker le signal de référence.

28. Système selon la revendication 27, lequel inclut un séparateur de signal de synchronisation (119) pour séparer les signaux de synchronisation vis-à-vis du signal vidéo et un moyen de détection de coordonnées de pixel (110) pour recevoir les signaux de synchronisation séparés par le séparateur de signal de synchronisation (119) et pour détecter des positions de pixels dans une trame de l'image vidéo et ainsi, les données vidéo correspondant aux pixels contenus dans la section limitée (figure 3) sont détectées et stockées dans le premier bloc mémoire (RMEM) du moyen de mémoire (106).
